# EUROPEAN PATENT APPLICATION

(11) **EP 4 597 296 A1**
(43) Date of publication of application: **06.08.2025**
(21) Application number: 24154720.7
(22) Date of filing: 30.01.2024
(51) Int. Cl.: G06F 3/14

(54) **MASTER DISPLAY UNIT, SLAVE DISPLAY UNIT, LARGE SCREEN DISPLAY, AND METHOD APPLIED TO A LARGE SCREEN DISPLAY**

(71) Applicant: Optoma Europe Ltd., Hemel Hempstead HP1 2UJ (GB)
(72) Inventor: MacLeod, Scott, Hemel Hempstead, HP1 2UJ (GB)
(74) Representative: Ter Meer Steinmeister & Partner

(57) **Abstract**

A master display unit (10) of a large screen display (30) comprises: an image data receiving unit (11), at least one sensing element (12), at least one contact data receiving unit (13), a control unit (14), a display element (15) and an image data providing unit (16). The image data receiving unit (11) receives image data. The at least one sensing element (12) is disposed on at least one edge of the master display unit (10). The at least one sensing element (12) senses at least one contact of at least one slave display unit (20) and provides a contact data of the master display unit (10). The at least one contact data receiving unit (13) receives at least one contact data of at least one slave display unit (20). The control unit (14) is communicatively coupled to the image data receiving unit (11), the at least one sensing element (12) and the at least one contact data receiving unit (13). The control unit (14) receives the contact data of the master display unit (10) and processes the image data provided by the image data receiving unit (11) based on the contact data of the master display unit (10) and the at least one contact data of the at least one slave display unit (20). The display element (15) is communicatively coupled to the control unit (14). The display element (15) displays an image according to the processed image data. The image data providing unit (16) is communicatively coupled to the control unit (14). The image data providing unit (16) provides the image data to the at least one slave display unit (20).

## Description

### TECHNICAL FIELD

The present disclosure relates to a master display unit of a large screen display. Further, the present disclosure relates to a slave display unit of a large screen display. The present disclosure also relates to a large screen display and a method applied to a large screen display.

### TECHNICAL BACKGROUND

A large screen display is commonly used e.g. in showrooms, sale rooms or stands.

The large screen display is consisted of or includes multiple display units combined to form a single large display. Each display unit displays a smaller piece of an overall image. In other words, the large screen display are formed of a matrix of the multiple display units being arranged in lines and columns, such that the large screen display displays the overall image. In conventional large screen displays, one of the multiple display units is designated as to be a master display unit which controls the other display units, in particular slave display units, of the large screen display. A location of each display unit in the multi-display unit arrangement, i.e. matrix, needs to be known such that each display unit can be configured to appropriately display a correct image. The only way to configure the arrangement of the multiple display units, in particular the slave display units, in the multi-display unit arrangement is for the master display unit control interface to provide a user with a means of programming the locations of each slave display unit. The manual providing programming of the locations of the master display unit and each one of the slave display units by the user is time-consuming and unpractical, because a replacement, a rearrangement of separating display units of the multi-display unit arrangement leads to a lot of manual working steps or any programming requires knowledge how to program or set the locations of the single slave display units.

The information disclosed in this background section is only for enhancement of understanding of the background of the described technology and therefore it may contain information that does not form the prior art that is already known to a person of ordinary skill in the art. Further, the information disclosed in the background section does not mean that one or more problems to be resolved by one or more embodiments of the disclosure was acknowledged by a person of ordinary skill in the art.

### SUMMARY OF THE DISCLOSURE

An object of the present disclosure is to provide a large screen display, a master display unit, and a slave display unit allowing an automatic identification respectively sensing of the locations of the master display unit and each one of the slave display units leading to a reduction of the time-consumption of a configuration of a multi-display unit arrangement and leading to an increased practicality of the multi-display unit arrangement.

This object is solved by the features of the independent claims. Preferred embodiments are given in the dependent claims.

In one aspect of the disclosure a master display unit of a large screen display is presented. The master display unit of a large screen display comprises an image data receiving unit configured for receiving image data, at least one sensing element disposed on at least one edge of the master display unit, the at least one sensing element configured for sensing at least one contact of at least one slave display unit on at least one edge of the master display unit and configured for providing contact data of the master display unit, at least one contact data receiving unit configured for receiving at least one contact data of at least one slave display unit, a control unit communicatively coupled to the image data receiving unit, the at least one sensing element and the at least one contact data receiving unit, the control unit configured for receiving the contact data of the master display unit, the control unit configured for processing the image data based on the contact data of the master display unit and the at least one contact data of the at least one slave display unit, a display element configured for displaying an image according to the processed image data, an image data providing unit configured for providing the image data to the at least one slave display unit.

The master display unit may be any unit, in particular the only unit, of the large screen display being configured for controlling at least one, in particular a plurality of, slave display unit but is not limited thereto. The master display unit may be directly or indirectly communicatively coupled to the at least one slave display unit by wire manner (e.g. via Ethernet) or wireless manner (e.g. via Wi-Fi). In wire manner, for example, the master display unit and the at least one slave display unit may be communicatively coupled one by one in a serial daisy chain, or each of the at least one slave display unit is respectively connected to the master display unit.

The master display unit may be configured for providing control data associated with control signals to the at least one slave display unit. The control data may represent any data for controlling, e.g. turn on or turn off, the slave display unit but is not limited thereto. Additionally, the master display unit may be configured for providing image data, in particular image data or image data processed by the master display unit, to the at least one slave display unit. Further, additionally, the master display unit may be configured for providing power to the at least one slave display unit. The master display unit may comprise an image data receiving unit, at least one sensing element, at least one contact data receiving unit, a control unit, a display element, and an image data providing unit but is not limited thereto. Additionally, the master display unit may comprise a contact data request providing unit and/or at least one gravitational sensor but is not limited thereto. The master display unit comprises a front side, a back side and four edges/sidewalls (top, bottom, left, right) but are not limited thereto. The master display unit may comprise a data memory for storing determined position data and ID of the master display unit. The master display unit may further comprise a master display unit control interface. A user can operate the master display unit, e.g. turn on, turn of, through the master display unit control interface, and the user can provide additional layout information like the general form of the large screen display, e.g. L-form, 1x2 matrix, 2x2 matrix or 3x3 matrix, to the control unit of the master display unit through the master display unit control interface. The layout information may be considered by the control unit of the master display unit in the processing of the image data. In an embodiment, the layout information may be considered by the control unit of the master display unit in the processing of the image data and the layout information may be also considered by the control units of the slave display units in the processing of the image data.

The image data receiving unit may represent any unit being configured for receiving image data from the external host. The image data receiving unit may be arranged in the master display unit but is not limited thereto. In this context, the image data may represent any image data being provided to the master display unit and/or being received by the master display unit from at least one device being external to the master display unit and external to the large screen display. In other words, the image data may be any data being not processed or affected by the master display unit and/or by any other unit of the large screen display.

The sensing element may represent any element or device being configured for sensing, measuring, or identifying a contact between at least two neighboring display units and for providing and generating contact data. In other words, the sensing element may be an element for sensing, measuring or identifying if there is a contact between at least two neighboring display units. The contact data may represent any data indicating a contact within a range of distance (D) between the at least two neighboring display units. In this context, the two display unit may have a range of distance (D) is 0~5(cm), but is not limited thereto. The sensing element of the master display unit may be configured for sensing a contact of at least one slave display unit to at least one edge/sidewall of the master display unit. The sensing element of the slave display unit may be configured for sensing a contact of the master display unit and/or at least one other slave display unit to at least one edge/sidewall of the slave display unit. The at least one sensing element of the master display unit and/or the at least one sensing element of the slave display unit may be arranged at or on at least one edge/sidewall of the master display unit and/or slave display unit. Alternatively, the at least one sensing element of the master display unit and/or the at least one sensing element of the slave display unit may be arranged fully or at least partially embedded respectively hidden in at least one edge/sidewall of the master display unit and/or slave display unit. Alternatively, the at least one sensing element of the master display unit and/or the at least one sensing element of the slave display unit may be arranged spaced apart from at least one edge/sidewall of the master display unit and/or slave display unit. Alternatively, the at least one sensing element of the master display unit and/or the at least one sensing element of the slave display unit may be arranged in the centrum of the master display unit and/or slave display unit. For instance, the at least one sensing element may be a button in form of a mechanical contact switch, a magnetic detector, a pressure sensor, a tactile sensor, and/or an optical sensor but is not limited thereto. The at least one sensing element may comprise identical or different sensors. Based on the used sensing element, the arrangement of the sensing elements of neighbored display units, e.g. master display unit and/or slave display unit, must be adapted to each other or not. For instance, in case the at least one sensing element is e.g. a button, a tactile sensor, or a pressure sensor, the arrangement or location of the sensing element may only be limited to that the at least one sensing element of the master display unit and/or the at least one sensing element of the slave display unit has to be arranged at or on at least one edge/sidewall of the master display unit and/or slave display unit or has to be arranged at least partially embedded and respectively hidden in at least one edge/sidewall of the master display unit and/or slave display unit such that at least one surface of the sensing element is exposed. In case the sensing element is e.g. an optical sensor, the arrangement or location of the at least one sensing element of the display unit, e.g. master display unit and/or slave display unit, may must be adapted to the sensing element or a counterpart sensing element, e.g. reflection element, of the neighbored display unit, wherein the at least one sensing element can be arranged anywhere on the display unit. The at least one sensing element may be a sensing element continuously sensing a contact of at least one other display unit to the display unit. Alternatively, the at least one sensing element may be a sensing element which senses a contact of at least one other display unit to the display unit in intervals or periodically, e.g. once every ten minutes, but is not limited thereto.

The contact data may represent any data indicating if and how many the edge/sidewalls of the display unit, i.e. master display unit or slave display unit, is in contact to at least one other display unit. The contact data may be a string number or an integer number but is not limited thereto. For instance, the contact data may comprise an ID including 4 bits (binary digit) in binary, like 1000 but is not limited thereto. Exemplary, when the contact data may be an ID with 4 bits, the bits of the ID represent that top, bottom, left and right of the display unit are generated sensed signals or not. Therefore, if the master display unit may have a contact to a slave display unit only on top of the master display unit, the ID of the master display unit is 1000 in binary. In an embodiment, the ID is 8 in decimal, and 8 in hex. In this context, 1 may indicate an existence of a contact and 0 may indicate a non-existence of a contact. In the other embodiment, top and left sensing elements of the master display unit senses contacts, therefore, the ID of the master display unit is 1010. The control units of the master display unit and at least one slave display unit can compute and generate the IDs of themselves. The IDs are respectively stored in the data memories of the master the master display unit and the at least one slave display unit.

The contact data receiving unit may represent any unit being configured for receiving at least one contact data of at least one slave display unit of the large screen display. The contact data receiving unit may be indirectly or directly communicatively coupled by wire or wireless to the slave display unit, in particular to a contact data providing unit, of the slave display unit.

The control unit of the master display unit may represent any unit configured for processing the image data provided by the image data receiving unit of the master display unit. The processing of the image date may be based on the contact data of the master display unit and the at least one contact data of the at least one slave display unit. Alternatively, when the master display unit comprises a gravitational sensor, the processing of the received image data may be based on the contact data of the master display unit, the at least one contact data of the at least one slave display unit, and the orientation data but is not limited thereto. Further, the control unit of the master display unit may be configured for controlling the master display unit by providing and respectively generating and executing control signals and/or for controlling the at least one slave display unit by providing and respectively generating and transmitting control signals to the at least one slave display unit but is not limited thereto. The control unit may be directly or indirectly communicatively coupled by wire or wireless to the image data receiving unit, the at least one sensing element, the at least one contact data receiving unit, the display element, the image data providing unit, the contact data request providing unit and/or the at least one gravitational sensor but is not limited thereto. The control unit of the master display unit may be further configured for determining position data of the master display unit and the at least one slave display unit based on the contact data of the master display unit and the at least one contact data of the at least one slave display unit. For example, when the ID of the master display unit is 0001 that represents position data is unit 1, the ID of the master display unit is 0002 that represents position data is unit 2. Therefore, the control unit 14 can compute to generate the position data of positions of the master display unit and all of the slave display units of large screen display according to the ID of the master display unit, at least one ID of the at least one slave display unit. In an embodiment, the control units of the master display unit and all of the slave display units of large screen display may be capable of controlling the display elements to display correct images based on the position data of positions of the master display unit and all of the slave display units of large screen display, and the layout information of the large screen display.

In this context, the term "processing" may represent that the control unit of the master display unit may be configured for changing or customizing the image data format of the image data to be useable by the master display unit and/or the slave display unit. Additionally or alternatively, the term "processing" may represent that the control unit is configured for splitting or dividing the image data into one or more split image data sets, wherein the number of split image data sets may correspond to the number, in particular maximum number, of used display units, i.e. master display units and slave display units, in the large screen display.

The display element may represent any element, device or unit being configured for displaying an image according to the image data and/or the processed image data processed by the master display unit, in particular the control unit of the master display unit, and/or the slave display unit, in particular the control unit of the slave display unit. The display element may be arranged at the front of the master display unit and/or slave display unit and may extend over the entire surface of the front of the master display unit and/or slave display unit but is not limited thereto.

The image data providing unit may represent any unit being configured for providing and respectively transmitting the image data received by the image date receiving unit of the master display unit or the processed image data processed by the control unit of the master display unit to the at least one slave display unit. The image data providing unit and the at least one slave display unit, in particular the image data receiving unit of the slave display unit, may be directly or indirectly communicatively coupled by wire or wireless to each other. The image data providing unit may be further configured for providing the image data with determined position data of the control unit of the master display device to the at least one slave display unit.

The contact data request providing unit may represent any unit configured for generating and respectively providing a contact data request and for transmitting the generated contact data request to at least one slave display unit. The contact data request providing unit may be directly or indirectly communicatively coupled by wire or wireless to the slave display unit, in particular the contact data request receiving unit of the slave display unit. The contact data request may represent any query, question or request leading to or triggering the at least one slave display unit, e.g. one specific slave display unit or all slave display units of the large screen display, to sense and transmit or to transmit and respectively provide their contact data to the master display unit. For instance, the contact data request may be a specific message transmitted to one specific slave display unit or a broadcast request/message transmitted to all slave display units of the large screen display.

The gravitational sensor may represent any sensor configured for sensing or measuring orientation data. The orientation data may represent any data indicating the orientation, i.e. direction or inclination, of the master display unit and/or the slave display unit. For example, at least one of the master display unit and the slave display units are disposed in portrait mode. The portrait mode means that the high is longer than width of the master display unit or the slave display unit. The gravitational sensor may be arranged both in master display unit and/or the slave display unit. Alternatively, the gravitational sensor may be arranged on a surface, i.e. an edge/sidewall or back-wall of the master display unit and/or the slave display unit. The gravitational sensor may be directly or indirectly communicatively coupled to control unit of the master display unit and/or to the control unit of the slave display unit by wire or wireless. Additionally, the gravitational sensor may be any sensor being configured for sensing or measuring the gravity acceleration affecting on the master display unit and/or the slave display unit in order to determine the height position in which the master display unit and/or the slave display unit is arranged.

The slave display unit may represent any unit of the large screen display being configured to be controlled by a master display unit but is not limited thereto. The slave display unit may be directly or indirectly communicatively coupled by wire or wireless to at least the master display unit. The slave display unit may be configured for receiving control data associated with control signals from the master display unit. Additionally, the slave display unit may be configured for receiving image data or image data processed by the master display unit, from the master display unit. Further, additionally, the slave display unit may be configured for receiving power from the master display unit. The slave display unit may comprise an image data receiving unit, at least one sensing element, a control unit, a display element, and a contact data providing unit but is not limited thereto. Additionally, the slave display unit may comprise a contact data request receiving unit and/or at least one gravitational sensor but is not limited thereto. The slave display unit comprises a front side, a back side and at least four side walls but are not limited thereto. The slave display unit may comprise a data memory for storing the determined position data provided by respectively received from the master display unit and the ID of the slave display unit. The slave display unit may comprise an image data providing unit. The image data providing unit may be any unit being configured for providing the image data and the determined position data both provided by respectively received from the master display unit to another slave display unit. The slave display unit may be identical to the master display unit.

The image data receiving unit may represent any unit being configured for receiving image data from the master display unit or for receiving processed image data provided by the master display unit, in particular by the image data providing unit of the master display unit. The image data receiving unit may be directly or indirectly communicatively coupled by wire or wireless to the master display unit, in particular by the image data providing unit of the master display unit, but is not limited thereto.

The control unit of the slave display unit may represent any unit being configured for may represent any unit configured for processing the image data provided by the master display unit, in particular by the image data receiving unit of the master display unit. The processing of the image date may be based on the contact data of the slave display unit. Alternatively, when the slave display unit comprises a gravitational sensor, the processing of the image data may be based on the contact data of the at least one slave display unit and the orientation data but is not limited thereto. Further, the control unit of the slave display unit may be configured for controlling the slave display unit by providing control signals and/or by receiving and executing control data associated with control signals provided by the master display unit. The control unit may be directly or indirectly communicatively coupled by wire or wireless to the image data receiving unit, the at least one sensing element, the display element, the contact data request receiving unit and/or the at least one gravitational sensor but is not limited thereto. In this context, the term "processing" may represent that the control unit of the slave display unit may be configured for changing or customizing the image data format of the received image data to be useable by the slave display unit. Additionally or alternatively, the term "processing" may represent that the control unit of the slave display unit is configured for splitting and dividing the received image data into one or more split image data sets based on the position data provided by the master display unit.

The contact data providing unit may be any unit being configured for providing the contact data of the slave display unit at least to the master display unit, in particular the contact data receiving unit of the master display unit. The contact data providing unit may be directly or indirectly communicatively coupled by wire or wireless to the master display unit, in particular the contact data receiving unit of the master display unit.

The contact data request receiving unit may represent any unit being configured for receiving contact data request from the master display unit, in particular from the contact data request providing unit of the master display unit. The contact data request receiving unit may be directly or indirectly communicatively coupled by wire or wireless to the master display unit, in particular to the contact data request providing unit of the master display unit. Additionally, the contact data request receiving unit may be configured for providing or transmitting the contact data request to the control unit of the slave display unit.

By providing contact data of the master display unit, receiving contact data from the slave display unit and including both contact data in the processing of the received image data of the control unit, an automatic identification sensing of the positions of the master display unit and each one of the slave display units can be provided such that a reduction of the time-consumption of a configuration of a multi-display unit arrangement and an increased practicality of the multi-display unit arrangement can be provided.

In an embodiment of the master display unit, the wherein the at least one sensing element is a button, a magnetic detector, a tactile sensor or an optical sensor.

In an embodiment of the master display unit, the at least one sensing element has four sensing elements, each of the four sensing elements is arranged on each one of the edges of the master display unit.

By arranging at least one sensing element at each one of the edges of the master display unit, the accuracy and reliability of the sensing and identifying of a contact of at least one slave display unit to at least one edge of the master display unit can be increased.

In an embodiment of the master display unit, the control unit is further configured for determining position data of the master display unit and position data of the at least one slave display unit based on the contact data of the master display unit and the at least one contact data of the at least one slave display unit; and wherein the image data providing unit is configured for providing the image data or providing the image data with the determined position data to the at least one slave display unit.

In an embodiment of the master display unit, the provided contact data of the master display unit and the at least one contact data of the at least one slave display unit are IDs, each one of the IDs includes 4 bits.

In an embodiment of the master display unit, the master display unit further comprising a contact data request providing unit configured for generating a contact data request and for transmitting the contact data request to at least one slave display unit.

By generating and transmitting a contact data request to at least one slave display unit, the master display unit can be switched from a continuous search mode into a limited, in particular with respect to time, search mode in which the master display unit waits for or expects the contact data from the at least one slave display unit. Therefore, the continuous search mode being highly energy consuming and highly resource consuming of the master display unit, can be switched to a search mode being more energy efficient and recourse saving.

In an embodiment of the master display unit, the master display unit further comprises at least one gravitational sensor configured for providing orientation data indicating the orientation of the master display unit, wherein the control unit is further configured for processing the image data based on the contact data of the master display unit, the contact data of the at least one slave display unit, and the orientation data.

By including a gravitational sensor into the master display unit and by using the orientation data in the processing of the received image data, the accuracy and reliability of the processed data can be increased.

In a further aspect, a slave display unit is presented. The slave display unit of a large screen display comprises an image data receiving unit configured for receiving image data or processed image data provided by a master display unit, at least one sensing element configured for sensing a contact of the master display unit and/or at least one other slave display unit on at least one edge of the slave display unit and configured for providing contact data of the slave display unit, a control unit configured for processing the received image data based on the provided contact data, a display element configured for displaying an image according to the processed image data, and a contact data providing unit configured for providing the contact data of the slave display unit to the master display unit.

In an embodiment of the slave display unit, the at least one sensing element is a button, a magnetic detector, a tactile sensor, or an optical sensor.

In an embodiment of the slave display unit, at least one sensing element is arranged on each one of the edges.

By arranging at least one sensing element at each one of the edges of the slave display unit, the accuracy and reliability of the sensing and identifying of a contact of at least one slave display unit and/or master display unit to at least one edge of the slave display unit can be increased.

In an embodiment of the slave display unit, the contact data of the slave display unit are an ID which includes 4 bits.

In an embodiment of the slave display unit, the slave display unit further comprises a contact data request receiving unit configured for receiving a contact data request from the master display unit.

By receiving a contact data request from the master display unit, the slave display unit can be switched from a continuous sensing mode into a limited, in particular with respect to time, sensing mode in which the slave display unit, in particular the at least one sensing element of the slave display unit senses a contact of the master display unit and/or at least one other slave display unit on at least one edge of the slave display unit. Therefore, the continuous sensing mode being highly energy consuming and highly resource consuming of the slave display unit, can be switched to a sensing mode being more energy efficient and recourse saving.

In an embodiment of the slave display unit, the slave display unit further comprises at least one gravitational sensor configured for providing orientation data indicating the orientation of the slave display unit, wherein the control unit is further configured for processing the received image data based on the provided contact data of the slave display unit and the orientation data.

By including a gravitational sensor into the slave display unit and by using the orientation data in the processing of the image data, the accuracy and reliability of the processed data can be increased.

In a further aspect, a large screen display is presented. The large screen display comprises a master display unit as described above and at least one slave display unit as described above.

In an embodiment of the large screen display, the large screen display is a 1x2, a 2x1, a 2x2, a 2x3, a 3x2 or a 3x3 (display units) large screen display. Alternatively, the large screen display may have an irregular configuration like a X-form, an U-Form, or a L-form but is not limited thereto.

In an embodiment of the large screen display, the master display unit and the at least one slave display unit are connected in a serial daisy chain or the master display unit is respectively connected to each one of a plurality of slave display units.

In further aspect, a method applied to a large screen display is provided. The method applied to a large screen display comprises the following steps of communicatively coupling a master display unit and at least one slave display unit, receiving image data by an image data receiving unit of the master display unit, sensing at least one contact of at least one slave display unit on at least one edge of the master display unit and providing contact data by at least one sensing element of the master display unit, sensing at least one contact of at least one of the master display unit and the at least one other slave display unit on at least one edge of the slave display unit and providing contact data of the slave display unit by the at least one sensing element of the slave display unit, receiving at least one contact data from a contact data providing unit of the at least one slave display unit by a contact data receiving unit of the master display unit, processing the image data based on the contact data of the master display unit and the at least one contact data of the at least one slave display unit by a control unit of the master display unit, displaying an image according to the processed image data by a display element of the master display unit, providing the image data by an image data providing unit of the master display unit to the at least one slave display unit, receiving the image data by an image data receiving unit of the slave display unit, processing by a control unit of the at least one slave display unit the image data based on the contact data of the slave display unit, and displaying an image according to the processed image data by a display element of the slave display unit.

In an embodiment of the method applied to a large screen display, the method further comprises the steps of generating a contact data request by a contact data request providing unit of the master display unit, transmitting the contact data request to the at least one slave display unit, receiving the contact data request from the master display unit by a contact data request receiving unit of the slave display unit.

In the following, the disclosure or further embodiments and advantages of the disclosure are explained in more detail based on drawings, wherein the drawings describe only embodiments of the disclosure. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

### BRIEF DESCRIPTION OF THE DRAWINGS

In the following, the present disclosure is described with reference to the enclosed figures:
Fig. 1 illustrates a master display unit according to the present disclosure.
Fig. 2 illustrates an exemplary embodiment of the master display unit of Fig. 1.
Fig. 3 illustrates a slave display unit according to the present disclosure.
Fig. 4 illustrates an exemplary embodiment of the slave display unit of Fig. 2.
Fig. 5 illustrates a first embodiment of the arrangement of sensing elements.
Fig. 6 illustrates a second embodiment of the arrangement of sensing elements.
Fig. 7 illustrates a first embodiment of a connection of a large screen display.
Fig. 8 illustrates a second embodiment of a connection of a large screen display.
Fig. 9 illustrates a method applied to a large screen display.
Fig. 10 illustrates an exemplary embodiment of a large screen display.

### DETAILED DESCRIPTION OF EMBODIMENT

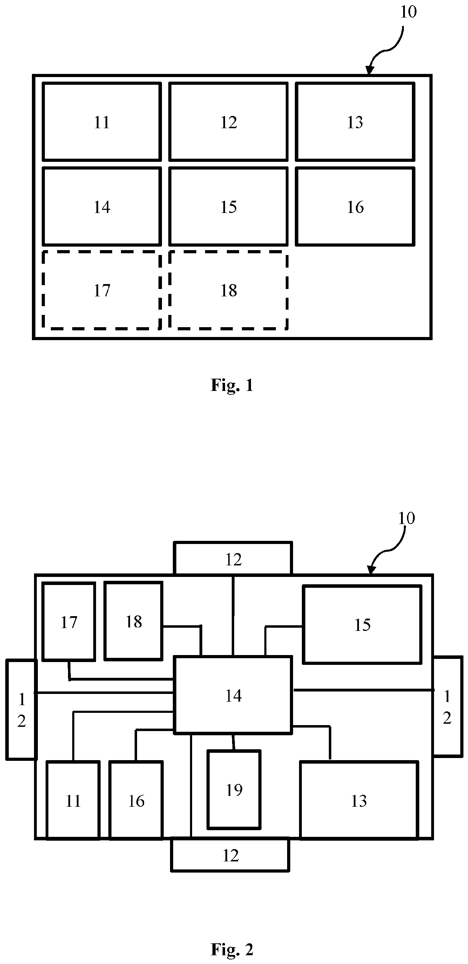

Fig. 1 shows a master display unit according to the present disclosure. The master display unit 10 of a large screen display 30, comprises an image data receiving unit 11, at least one sensing element 12, at least one contact data receiving unit 13, a control unit 14, a display element 15, and an image data providing unit 16. The image data receiving unit 11 is configured for receiving image data which are provided from an external host or image providing device (it is not show). The at least one sensing element 12 is disposed on at least one edge/sidewall of the master display unit 10. The at least one sensing element 12 is configured for sensing at least one contact of at least one slave display unit 20 and is configured for providing contact data to the control unit 14 of the master display unit 10. The at least one contact data receiving unit 13 is configured for receiving at least one contact data of the at least one slave display unit 20.

The control unit 14 is communicatively coupled to the image data receiving unit 11, the at least one sensing element 12 and the at least one contact data receiving unit 13. The control unit 14 is configured for processing the image data provided by the image data receiving unit 11 based on the contact data of the master display unit 10 and the at least one contact data of the at least one slave display unit 20. The display element 15 is communicatively coupled to the control unit 14. The display element 15 is configured for displaying an image according to the image data. The image data providing unit 16 is communicatively coupled to the control unit 14. The image data providing unit 16 is configured for providing the image data to the at least one slave display unit 20.

Optionally, the master display unit 10 further comprises a contact data request providing unit 17. The contact data request providing unit 17 is communicatively coupled to the control unit 14. The contact data request providing unit 17 is configured for generating a contact data request and for transmitting the contact data request to at least one slave display unit 20.

Optionally, the master display unit 10 further comprises at least one gravitational sensor 18. The at least one gravitational sensor 18 is communicatively coupled to the control unit 14. The at least one gravitational sensor 18 is configured for providing orientation data indicating the orientation of the master display unit 10, wherein the control unit 14 is further configured for processing the image data based on the contact data of the master display unit 10, the at least one contact data of at least one slave display unit 20, and the orientation data.

Fig. 2 shows an exemplary embodiment of the master display unit of Fig. 1. The master display unit 10 comprises an image data receiving unit 11. The image data receiving unit 11 is communicatively coupled to a control unit 14 by a wire. The master display unit 10 further comprises four sensing elements 12. Each of sensing elements is arranged on each edge/sidewall of the master display unit. The sensing elements 12 are communicatively coupled to the control unit 14. The sensing elements 12, for example, are buttons and are identical to each other. The master display unit 10 further comprises a contact data receiving unit 13. The contact data receiving unit 13 is communicatively coupled by wire to the control unit 14. The master display unit 10 further comprises a display element 15. The display element 15 is communicatively coupled by wire to the control unit 14. Further, the master display unit 10 comprises an image data providing unit 16. The image data providing unit 16 is communicatively coupled by wire to the control unit 14. Additionally, the master display unit 10 comprises a contact data request providing unit 17. The contact data request providing unit 17 is communicatively coupled by wire to the control unit 14. Furthermore, the master display unit 10 comprises a gravitational sensor 18. The gravitational sensor 18 is communicatively coupled by wire to the control unit 14. Furthermore, the master display unit 10 comprises a master display unit control interface 19. The master display unit control interface 19 is on screen display (OSD) displayed on display element 15. The master display unit control interface 19 is executed by the control unit 14.

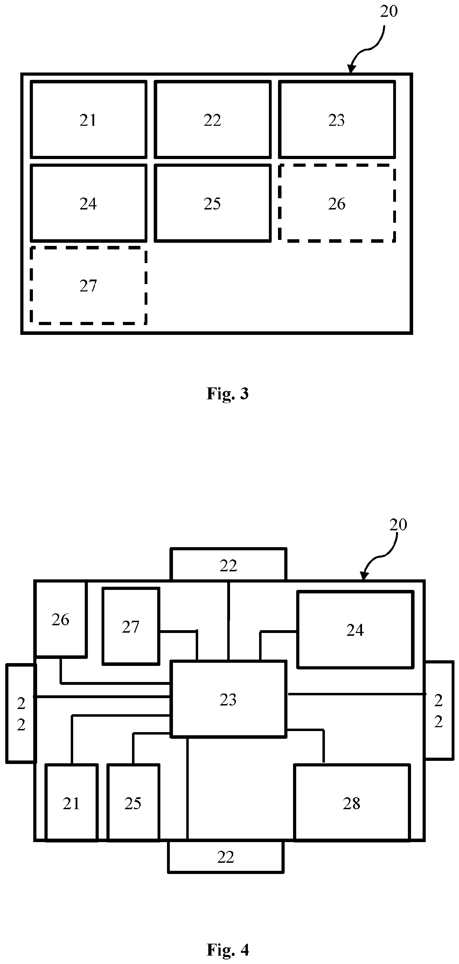

Fig. 3 shows a slave display unit according to the present disclosure. The slave display unit 20 of a large screen display 30, comprises an image data receiving unit 21, at least one sensing element 22, a control unit 23, a display element 24, and a contact data providing unit 25. The image data receiving unit 21 is configured for receiving image data provided by a master display unit 10. The at least one sensing element 22 is disposed on at least one edge of the slave display unit 20. The at least one sensing element 22 is configured for sensing at least one contact of the master display unit 10 and at least one other slave display unit and is configured for providing contact data of the slave display unit 20. The control unit 23 is communicatively coupled to the image data receiving unit 21 and the at least one sensing element 22. The control unit 23 is configured for processing the image data based on the provided the contact data of the slave display unit 20. The display element 24 is configured for displaying an image according to the processed image data. The contact data providing unit 25 is configured for providing the contact data of the slave display unit 20 to the master display unit 10.

Optionally, the slave display unit 20 further comprises a contact data request receiving unit 26. The contact data request receiving unit 26 is communicatively coupled to the control unit 23. The contact data request receiving unit 26 is configured for receiving a contact data request from the master display unit 10.

Optionally, the slave display unit 20 further comprises at least one gravitational sensor 27. The at least one gravitational sensor 27 is communicatively coupled to the control unit 23. The at least one gravitational sensor 27 is configured for providing orientation data indicating the orientation of the slave display unit 20, wherein the control unit 23 is further configured for processing the image data based on the contact data of the slave display unit 20 and the orientation data.

Fig. 4 shows an exemplary embodiment of the slave display unit of Fig. 3. The slave display unit 20 comprises an image data receiving unit 21. The image data receiving unit 21 is communicatively coupled to a control unit 23. Further, the slave display unit 20 comprises four sensing elements 22. Each of the sensing elements is arranged on each edge/sidewall of the slave display unit 20. The sensing elements 12 are communicatively coupled by wire to the control unit 23. The sensing elements 12 are, for example, buttons and are identical to each other. Furthermore, the slave display unit 20 comprises a display element 24. The display element 24 is communicatively coupled by wire to the control unit 23. Additionally, the slave display unit 20 comprises a contact data providing unit 25. The contact data providing unit 25 is communicatively coupled by wire to the control unit 23. The slave display unit 20 further comprises a contact data request receiving unit 26. The contact data request receiving unit 26 is communicatively coupled by wire to the control unit 23. Furthermore, the slave display unit 20 comprises a gravitational sensor 27. The gravitational sensor 27 is communicatively coupled by wire to the control unit 23. Additionally, the slave display unit 20 comprises an image data providing unit 28. The image data providing unit 28 is communicatively coupled by wire to the control unit 23.

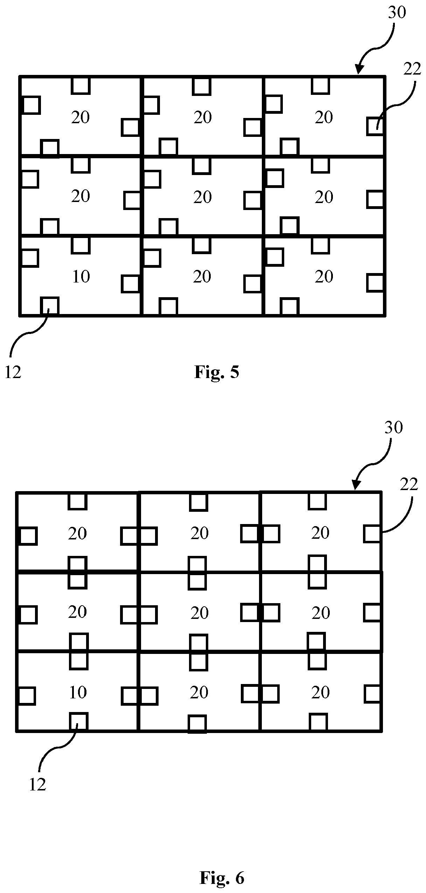

Fig. 5 shows a first embodiment of the arrangement of sensing elements 12 of the master display unit 10 and sensing elements 22 of the master display unit 10. In the first embodiment of the arrangement of sensing elements, the master display unit 10 and the slave display unit 20 comprise only buttons as the sensing element. On each edge/sidewall of the master display unit 10 and on each edge/sidewall of the slave display unit 20, only one sensing element is arranged. The sensing elements 12 and 22 are identical and are buttons. To ensure that the sensing elements 12 and 22 work properly and satisfactorily, the sensing elements 12 and 22 are arranged offset and respectively shifted to each other. This prevents the sensing elements from influencing each other.

Fig. 6 shows a second embodiment of the arrangement of sensing elements 12 and 22. In the second embodiment of the arrangement of sensing elements 12 and 22, the master display unit 10 and the slave display unit 20 comprise optical sensors as the sensing element 12 and 22. On each edge/sidewall of the master display unit 10 and on each edge/sidewall of the slave display unit 20, one sensing element is arranged. The sensing elements 12 and 22 are identical and are optical sensors. An optical sensor comprises a sender and receiver of an optical signal. To ensure that the sensing elements 12 and 22 work properly and satisfactorily, the sensing elements 12 and 22 are aligned to each other such that the transmitted optical signals from one display unit 10 or 20 can be received from another display unit 10 or 20 and vice versa.

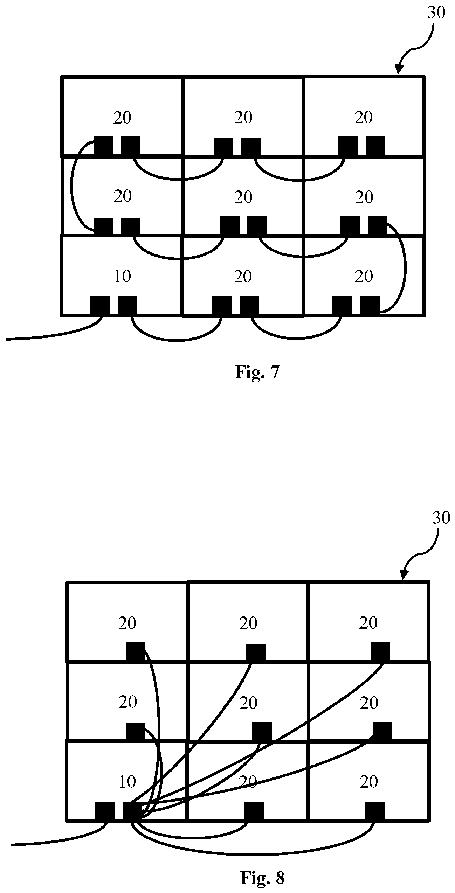

Fig. 7 shows a first embodiment of a connection of a large screen display. The master display unit 10 communicatively coupled to the external host (it is not shown). The master display unit 10 and the plurality of slave display units 20 of the large screen display 30 are connected one by one in a serial daisy chain. In other words, when an image data provided by the external host is transmitted from the master display unit 10 to the plurality of slave display units 20 one by one. The following slave display units 20 are linked, coupled or connected to the master display unit 10 as a series. The connection forms an open loop not a closed loop.

Fig. 8 shows a second embodiment of a connection of a large screen display. The master display unit 10 is communicatively coupled to the external host. Each one of the slave display units 20 is separately and independently communicatively coupled to the master display unit 10 for receiving the image data.

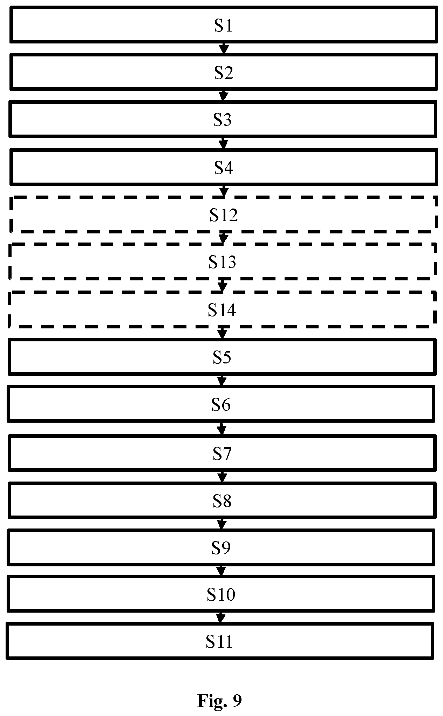

Fig. 9 shows a method is applied to a large screen display. In a first step S 1, a master display unit 10 and at least one slave display unit 20 are communicatively coupled. In a second step S2, image data are received by an image data receiving unit 11 of the master display unit 10. In a third step S3, at least one contact of at least one slave display unit 20 on at least one edge/sidewall of the master display unit 10 is sensed and contact data are provided by at least one sensing element 12 of the master display unit 10. In a fourth step S4, at least one contact of at least one of the master display unit 10 and at least one other slave display unit is sensed and contact data of the slave display unit 20 are provided by at least one sensing element 22 of the slave display unit 20. In a fifth step S5, at least one contact data is received from a contact data providing unit 25 of the at least one slave display unit 20 by a contact data receiving unit 13 of the master display unit 10. In a sixth step S6, the image data are processed based on the contact data of the master display unit 10 and the at least one contact data of at least one slave display unit 20 by a control unit 14 of the master display unit 10. In a sept step S7, an image according to the processed image data is displayed by a display element 15 of the master display unit 10. In an eight step S8, the image data is provided by an image data providing unit 16 of the master display unit 10 to the at least one slave display unit 20. In a ninth step S9, the image data are received by an image data receiving unit 21 of the slave display unit 20. In a tenth step S 10, by a control unit 23 of the at least one slave display unit 20, the image data are processed based on the contact data of the slave display unit 20. In an eleventh step S11, an image according to the processed image data is displayed by a display element 24 of the slave display unit 20.

Optionally, in a twelfth step S12, a contact data request is generated by a contact data request providing unit 17 of the master display unit 10. In a thirteenth step S13, the contact data request is transmitted to the at least one slave display unit 20. In a fourteenth step S14, a contact data request is received from the master display unit 10 by a contact data request receiving unit 26 of the slave display unit 20.

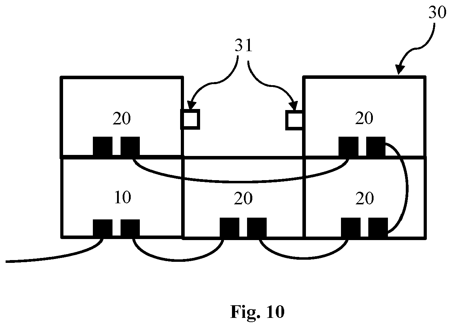

Fig. 10 illustrates an exemplary embodiment of a large screen display. The slave display unit 20 located upper left of the large screen display 30 and the other slave display unit 20 located upper right of the large screen display 30 have the same ID as 0100. Therefore, Auxiliary sensors 31 is capable for solving this problem. One of auxiliary sensor 31 may be corresponded to the sensing element 22 located right side of the slave display unit 20 located upper left of the large screen display 30. One of auxiliary sensor 31 may be corresponded to the sensing element 22 located left side of the slave display unit 20 located upper right of the large screen display 30. The ID of the slave display unit 20 located upper left of the large screen display 30 becomes 0101. The ID of the slave display unit 20 located upper right of the large screen display 30 becomes 0110. Two slave display unit 20 have different IDs, such that the position data also different.

The foregoing hardware of the embodiments of the disclosure may be following devices. The external host or the image providing device may be a laptop, a computer, a smart phone, video player or a computing pad which can provide image data to the master display unit 10 and at least one slave display unit 20. The master display unit 10 and the slave display unit 20, for example, are QLED display device, OLED display device, LED display device or LCD display device. In an embodiment, the master display unit 10 and the slave display unit 20 are the same display device. The image data receiving unit 11, 21 may be a circuit, an integrated circuits, a chip or a set of chips of HDMI interface, a circuit, an integrated circuits, a chip or a set of chips of RS232 interface or a circuit, an integrated circuits, a chip or a set of chips of USB interface.

In an embodiment, the image data receiving unit 11 of the master display unit 10 may communicatively couple with the external host by a wireless manner. The image data receiving unit 11 may be a circuit, an integrated circuits, a chip or a set of chips of wireless interface, for example, which is WIFI interface. The image data providing unit 16, 28 may be a circuit, an integrated circuits, a chip or a set of chips of one of the HDMI interface, USB interface and RS232 interface but is not limited thereto. The contact data receiving unit 13, the contact data providing unit 25, the contact data request providing unit 17 and the contact data request receiving unit 26 may be a circuit, an integrated circuits, a chip or a set of chips of one of the HDMI interface, USB interface and RS232 interface. In an embodiment, the contact data receiving unit 13, the contact data providing unit 25, the contact data request providing unit 17 and the contact data request receiving unit 26 may be a circuit, an integrated circuits, a chip or a set of chips of wireless interface, for example, which is WIFI interface but is not limited thereto. The sensing element 12, 22 may be a button device in form of a mechanical contact switch, a magnetic detector, a pressure sensor, a tactile sensor, and/or an optical sensor but is not limited thereto. The auxiliary sensor 31 may be a button device in form of a mechanical contact switch, a magnetic detector, a pressure sensor, a tactile sensor, and/or an optical sensor but is not limited thereto. The auxiliary sensor 31 corresponds to the sensing element 12, 22, such that the sensing element 12, 22 can generates contact data.

The control unit 14, 23 includes at least one processor. The processor may be a central processing unit (CPU) with image data processing and computation functions, or other programmable general-purpose or special-purpose microprocessor, a digital signal processor (DSP), an image processing unit (IPU), a graphics processing unit (GPU), a programmable controller, an application specific integrated circuit (ASIC), a programmable logic device (PLD), Field Programmable Gate Array (FPGA), an image processor, other similar processing devices or a combination of these devices. The display element 15, 24 may be a QLED panel, OLED panel, LED panel, micro LED panel or LCD panel but is not limited thereto. The abovementioned data memory, for example, comprises any type of fixed or removable random access memory (RAM), read-only memory (ROM), flash memory, hard disk drive (HDD), solid state drive (SSD), similar elements, or a combination of the above elements.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable people skilled in the art to understand the disclosure for various embodiments and with various modifications as are suited to the particular use or implementation contemplated. Therefore, the term "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow an inquirer to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by people skilled in the art without departing from the scope of the disclosure as defined by the following claims. Moreover, no element and component in the present disclosure is intended to be dedicated to the public regardless of whether the element or component is explicitly recited in the following claims.

### Reference signs

- 10: master display unit
- 11: image data receiving unit
- 12: sensing element
- 13: contact data receiving unit
- 14: control unit
- 15: display element
- 16: image data providing unit
- 17: contact data request providing unit
- 18: gravitational sensor
- 19: master display unit control interface
- 20: slave display unit
- 21: image data receiving unit
- 22: sensing element
- 23: control unit
- 24: display element
- 25: contact data providing unit
- 26: contact data request receiving unit
- 27: gravitational sensor
- 28: image data providing unit
- 30: large screen display
- 31: auxiliary sensor
- S1: coupling step
- S2: receiving step
- S3: sensing step
- S4: sensing step
- S5: receiving step
- S6: processing step
- S7: displaying step
- S8: providing step
- S9: receiving step
- 510: processing step
- S11: displaying step
- S12: generating step
- S13: transmitting step
- S14: receiving step

## Claims

1. A master display unit (10) of a large screen display (30), comprising:
an image data receiving unit (11) configured for receiving image data;
at least one sensing element (12) disposed on at least one edge of the master display unit (10), the at least one sensing element (12) configured for sensing at least one contact of at least one slave display unit (20) and configured for providing contact data of the master display unit (10);
at least one contact data receiving unit (13) configured for receiving at least one contact data of at least one slave display unit (20);
a control unit (14) communicatively coupled to the image data receiving unit (11), the at least one sensing element (12) and the at least one contact data receiving unit (13), the control unit (14) configured for receiving the contact data of the master display unit (10) and configured for processing the image data provided by the image data receiving unit (11) based on the contact data of the master display unit (10) and the at least one contact data of the at least one slave display unit (20);
a display element (15) communicatively coupled to the control unit (14), the display element (15) configured for displaying an image according to the processed image data; and
an image data providing unit (16) communicatively coupled to the control unit (14), the image data providing unit (16) configured for providing the image data to the at least one slave display unit (20).

2. The master display unit (10) according to claim 1, wherein the at least one sensing element (12) is a button, a magnetic detector, a tactile sensor, or an optical sensor; and/or the at least one sensing element (12) has four sensing elements, each of the four sensing elements is arranged on each one of the edges.

3. The master display unit (10) according to any preceding claims, wherein the control unit (14) is further configured for determining position data of the master display unit (10) and position data of the at least one slave display unit (20) based on the contact data of the master display unit (10) and the at least one contact data of the at least one slave display unit (20); and wherein the image data providing unit (16) is configured for providing the image data or processed image data with the determined position data to the at least one slave display unit (20).

4. The master display unit (10) according to any preceding claims, wherein the contact data of the master display unit (10) and the at least one contact data of the at least one slave display unit (20) are IDs, each one of the IDs includes 4 bits.

5. The master display unit (10) according to any preceding claims, further comprising:
a contact data request providing unit (17) communicatively coupled to the control unit (14), the contact data request providing unit (17) configured for generating a contact data request and for transmitting the contact data request to the at least one slave display unit (20).

6. The master display unit (10) according to any preceding claims, further comprising:
at least one gravitational sensor (18) communicatively coupled to the control unit (14), the at least one gravitational sensor (18) configured for providing orientation data indicating the orientation of the master display unit (10), wherein the control unit (14) is further configured for processing the image data based on the contact data of the master display unit (10), the at least one contact data of at least one slave display unit (20), and the orientation data.

7. A slave display unit (20) of a large screen display (30), comprising:
an image data receiving unit (21) configured for receiving image data;
at least one sensing element (22) disposed on at least one edge of the slave display unit (20), the at least one sensing element (22) configured for sensing at least one contact of at least one of a master display unit (10) and at least one other slave display unit (20) and configured for providing contact data of the slave display unit (20);
a control unit (23) communicatively coupled to the image data receiving unit (21) and the at least one sensing element (22), the control unit (23) configured for processing the image data based on the contact data of the slave display unit (20);
a display element (24) configured for displaying an image according to the processed image data; and
a contact data providing unit (25) configured for providing the contact data of the slave display unit (20) to the master display unit (10).

8. The slave display unit (20) according to any preceding claims, wherein the at least one sensing element (22) is a button, a magnetic detector, a tactile sensor, or an optical sensor and/or the at least one sensing element (22) has four sensing elements, each of the four sensing elements is arranged on each one of the edges.

9. The slave display unit (10) according to any preceding claims, wherein the contact data of the slave display unit (20) are an ID which comprises 4 bits.

10. The slave display unit (20) according to any preceding claims, further comprising:
a contact data request receiving unit (26) communicatively coupled to the control unit (23), the contact data request receiving unit (26) configured for receiving a contact data request from the master display unit (10).

11. The slave display unit (20) according to any preceding claims, further comprising:
at least one gravitational sensor (27) communicatively coupled to the control unit (23), the at least one gravitational sensor (27) configured for providing orientation data indicating the orientation of the slave display unit (20), wherein the control unit (23) is further configured for processing the image data based on the contact data of the slave display unit (20) and the orientation data.

12. A large screen display (30) comprising:
a master display unit (10) according to the claims 1 to 6; and
at least one slave display unit (20) according to the claims 7 to 11.

13. The large screen display (30) according to claim 12, wherein the large screen display (30) is one of 1x2, a 2x1, a 2x2, a 2x3, a 3x2 and a 3x3 large screen display; and/or the master display unit (10) and the at least one slave display unit (20) are connected in a serial daisy chain or the master display unit (10) is respectively connected to each one of a plurality of slave display units (20).

14. A method applied to a large screen display (30) comprising:
communicatively coupling (S1) a master display unit (10) and at least one slave display unit (20);
receiving (S2) image data by an image data receiving unit (11) of the master display unit (10);
sensing (S3) at least one contact of at least one slave display unit (20) on at least one edge of the master display unit (10) and providing contact data by at least one sensing element (12) of the master display unit (10);
sensing (S4) at least one contact of at least one of the master display unit (10) and at least one other slave display unit (20) and providing contact data of the slave display unit (20) by the at least one sensing element (22) of the slave display unit (20);
receiving (S5) at least one contact data from a contact data providing unit (25) of the at least one slave display unit (20) by a contact data receiving unit (13) of the master display unit (10);
processing (S6) the image data based on the contact data of the master display unit (10) and the at least one contact data of the at least one slave display unit (20) by a control unit (14) of the master display unit (10);
displaying (S7) an image according to the processed image data by a display element (15) of the master display unit (10);
providing (S8) the image data by an image data providing unit (16) of the master display unit (10) to the at least one slave display unit (20);
receiving (S9) the image data by an image data receiving unit (21) of the slave display unit (20);
processing (S10), by a control unit (23) of the at least one slave display unit (20), the image data based on the contact data of the slave display unit (20); and
displaying (S11) an image according to the processed image data by a display element (24) of the slave display unit (20).

15. The method according to claim 14, further comprising the step of:
generating (S12) a contact data request by a contact data request providing unit (17) of the master display unit (10);
transmitting (S 13) the contact data request to the at least one slave display unit (20); and
receiving (S14) the contact data request from the master display unit (10) by a contact data request receiving unit (26) of the slave display unit (20).
